# EUROPEAN PATENT APPLICATION

(11) **EP 4 852 134 A1**
(43) Date of publication of application: **09.12.2026**
(21) Application number: 25866538.9
(22) Date of filing: 12.09.2025
(51) Int. Cl.: H01M 10/42, H01M 4/525, H01M 10/052, H01M 4/505, H01M 4/02

(54) **SECONDARY BATTERY**

(30) Priority: 12.09.2024 KR 20240124712
(71) Applicant: LG Energy Solution, Ltd., Seoul 07335 (KR)
(72) Inventor: KANG, Joonhyeon, Daejeon 34122 (KR); KANG, Hyo Seok, Daejeon 34122 (KR); LEE, Sanghyun, Daejeon 34122 (KR); MYEONG, Seungjun, Daejeon 34122 (KR); PARK, Sin Young, Daejeon 34122 (KR); PARK, Cheol Hee, Daejeon 34122 (KR)
(74) Representative: Hoffmann Eitle
(86) International application number: PCT/KR2025/014235
(87) International publication number: WO 2026/059366

(57) **Abstract**

The present invention relates to a secondary battery comprising: a cathode including a cathode active material; an electrolyte; and an anode, wherein, in the secondary battery, the capacity change rate with respect to a termination voltage change represented by formula 1 below is 1 (Volt⁻¹) or less. [Formula 1] 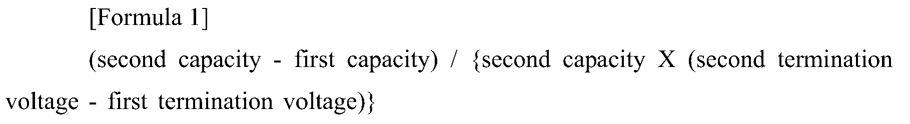 (second capacity - first capacity) / {second capacity × (second termination voltage - first termination voltage)} In formula 1, the second capacity is a discharge capacity measured after charging to a second termination voltage, the first capacity is a discharge capacity measured after charging to a first termination voltage, the second termination voltage is selected in a range of 4.15 V-4.25 V, the first termination voltage is selected in a range of 4.05 V-4.15 V, and the difference between the second termination voltage and the first termination voltage (second termination voltage - first termination voltage) is 0.05 V or more.

## Description

### Technical Field

The present disclosure relates to a secondary battery having a small capacity change rate depending on a change in voltage.

### Background Art

As technology development and a demand for various electronic devices increase, the demand for secondary batteries as an energy source is rapidly increasing. Among the secondary batteries, a secondary battery having high energy density and voltage, a long cycle life, and a low self-discharge rate is commercialized and widely used. Accordingly, industrial demand for improving performance of the secondary battery is increasing.

As a part of performance improvement of the secondary battery, introduction of a high-nickel lithium transition composite oxide having a layered structure as a positive electrode active material is noteworthy. In the positive electrode active material, a phenomenon in which nickel occupies a space in a lithium layer occurs. A nickel occupancy in the lithium layer (Ni_{Li}) causes a change in H2/H3 phase transition behavior, resulting in a change in electrochemical properties such as charge/discharge capacity of a lithium secondary battery.

A positive electrode active material having a NCM-based layered structure may have varied potential of a positive electrode even under the same cell voltage, depending on an electrode thickness, a ratio between an active material and a conductive material, a binder content, an electrolyte composition, the type of positive electrode and/or negative electrode, or a thickness of an electrode and/or electrolyte layer, in an electrode and cell manufacturing process. When positive electrode potential changes like this, a difference occurs in a design capacity so as to deviate from the expected specification, or there may be a change in cell performance and lifespan depending on a change in balance with a negative electrode.

That is, considering the aspects of design precision and quality control of a secondary battery, a cell having a small change in capacity even when positive electrode potential is changed is advantageous. However, when the existing technology is used, a positive electrode material is made without the consideration thereof, resulting in various quality issues in a cell manufacturing process.

### Detailed Description of the Invention

### Technical Goals

Various aspects of the present disclosure are directed to providing a secondary battery which includes a positive electrode active material including a lithium transition metal oxide and has a decreased capacity difference due to a change in charge termination voltage.

Accordingly, the present disclosure provides a secondary battery which improves initial design precision and has relatively consistent quality for changes in external conditions, since a capacity deviation by other variables which may be involved in a secondary battery design and/or manufacturing process may be reduced.

### Technical solutions

In one general aspect, a secondary battery includes: a positive electrode including a positive electrode active material; an electrolyte; and a negative electrode, wherein the secondary battery has a capacity change rate with respect to a change in termination voltage represented by the following Equation 1 of 1 (volts⁻¹ (Volt⁻¹)) or less: [Equation 1] 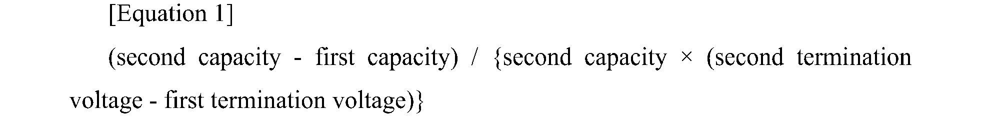 (second capacity - first capacity) / {second capacity × (second termination voltage - first termination voltage)}
wherein the second capacity is a discharge capacity measured after charging to the second termination voltage, and the first capacity is a discharge capacity measured after charging to the first termination voltage; and the second termination voltage is selected from a range of 4.15 volts (V) or more and 4.25 V or less, the first termination voltage is selected from a range of 4.05 V or more and 4.15 V or less, and a difference between the second termination voltage and the first termination voltage (second termination voltage - first termination voltage) is 0.05 V or more.

In an example aspect, the first capacity may be measured by constant current (CC) charging to the first termination voltage at a first C-rate, constant voltage (CV) charging until current (I) reaches less than 0.05 C, and then CC discharging to a voltage selected from a range of 1.5 V or more and 3.5 V or less at a second C-rate; the second capacity may be measured by CC charging to the second termination voltage at a third C-rate, CV charging until current (I) reaches less than 0.05 C, and CC discharging to a voltage selected from a range of 1.5 V or more and 3.5 V or less at a fourth C-rate; discharge voltages when measuring the first capacity and the second capacity are the same; and the first C-rate, the second C-rate, the third C-rate, and the fourth C-rate may be independently of one another values selected from a range of 0.1 coulomb (C) or more and 0.5 C or less.

In an example aspect, the secondary battery may have the capacity change rate with respect to the change in termination voltage represented by Equation 1 may be 0.9 (Volt⁻¹) or more and 1 (Volt⁻¹) or less.

In an example aspect, the positive electrode active material may include a lithium transition metal oxide including 80 mol% or more of nickel (Ni).

In an example aspect, the positive electrode active material may have a mole ratio of lithium to a transition metal (Ni, Co, Mn, or a dopant substituted for a transition metal site) of 0.9 or more and less than 1.

In an example aspect, the positive electrode active material may include a lithium transition metal oxide represented by any one of the following Chemical Formulae 1 to 3.

[Chemical Formula 1] Li₍₁₋ₐ₎(NiₓM¹₍₁₋ₓ₎)M²_{y}O₂

[Chemical Formula 2] Li₍₁₋ₐ₎(NiₓM¹₍₁₋ₓ₎)_{1-y}M²_{y}O₂

[Chemical Formula 3] Li_{(1-a-y)}(NiₓM¹₍₁₋ₓ₎)M²_{y}O₂

wherein M¹ is at least one selected from Co and Mn; M² is at least one selected from Al, Zr, B, W, Mo, Cr, Ta, Nb, Mg, Ce, Hf, La, Ti, Sr, Ba, F, P, S, Na, Si, Sb, V, and Y; and 0<a<0.1, 0.8≤x≤1, and 0≤y≤0.1.

In an example aspect, the positive electrode active material may include a lithium layer and a transition metal layer, and at least a part of lithium sites of the lithium layer may be occupied by nickel.

In an example aspect, a nickel occupancy in the lithium layer (Ni_{Li}) may be 0.003 or more and 0.015 or less.

In an example aspect, the positive electrode active material may have a Curie-Weiss temperature of 0 K or higher and 19 K or lower.

In an example aspect, the positive electrode active material may have the Curie-Weiss temperature of 3 K or higher and 10 K or lower.

In an example aspect, the positive electrode active material may have a lattice volume of 101.5 Å³ or more and 101.6 Å³ or less.

### Effects of the Invention

The secondary battery of the present disclosure may provide a secondary battery having a small difference in charge/discharge capacity despite charge termination voltage being changed. Accordingly, a capacity deviation by variables which may be involved in a secondary battery design and/or manufacturing process may be reduced, and quality may be relatively consistent despite changes in external conditions.

In addition, since the present disclosure includes a positive electrode having specific physical properties, the secondary battery may minimize a capacity change rate depending on a change in charge termination voltage, and thus, a secondary battery which has expected specifications in the design and/or manufacturing process or satisfies performance to be desired may be provided.

### Brief Description of Drawings

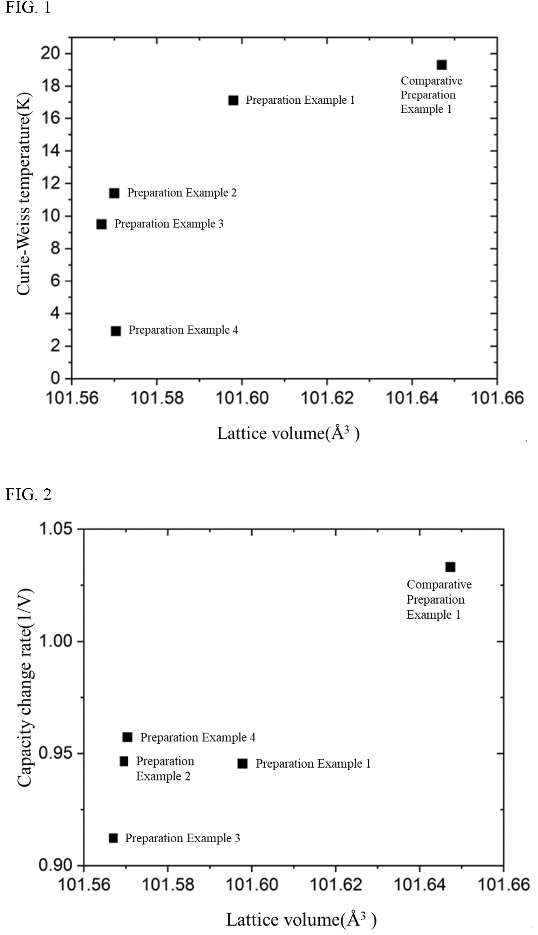

FIG. 1 is a graph showing a relationship between a lattice volume and a Curie-Weiss temperature of positive electrode active materials prepared in Preparation Examples 1 to 4 and Comparative Preparation Example 1 according to Experimental Example 1 of the present disclosure.
FIG. 2 is a graph showing a relationship between a lattice volume and a capacity change rate of secondary batteries manufactured with the positive electrode active materials prepared in Preparation Examples 1 to 4 and Comparative Preparation Example 1 according to Experimental Example 2 of the present disclosure.

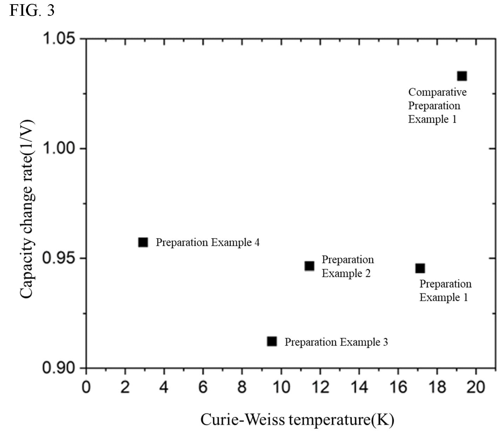

FIG. 3 is a graph showing a relationship between a Curie-Weiss temperature and a capacity change rate of the secondary batteries manufactured with the positive electrode active materials prepared in Preparation Examples 1 to 4 and Comparative Preparation Example 1 according to Experimental Example 2 of the present disclosure.

### Mode for Carrying Out the Invention

Terms and words used in the present specification and claims are not to be construed as having a general or dictionary meaning but are to be construed as having meaning and concepts meeting the technical spirit of the present disclosure based on a principle that the inventors can appropriately define the concepts of terms in order to describe their own disclosures in best mode.

Therefore, the configurations of the example aspects described in the present specification are only the most preferred example, but do not represent all of the technical spirit of the present disclosure. Thus, it should be understood that there may be various equivalents and modified examples for substituting the configurations at the time of filing the present disclosure. Singular forms in the present specification are intended to include plural forms unless the context clearly indicates otherwise.

In the present specification, unless explicitly stated to the contrary, a part "comprising" a constituent element will be understood to imply further inclusion of other constituent elements rather than the exclusion of any other constituent elements. Therefore, for example, a composition including Compound A may include compounds other than A. However, the term "comprising" also includes "essentially consisting of..." and "consisting of..." with more limited meaning, as the specific aspects, and for example, a "composition comprising Compound A" may also (essentially) consist of Compound A.

It should be understood that the terms such as "provide" or "have" used in the present specification merely specify the presence of practiced features, numerals, steps, constitutional elements, or a combination thereof, but do not preclude the presence or addition possibility of one or more other features, numerals, steps, constitutional elements, or combinations thereof.

In the present specification, when any layer is positioned "on" or "between" any other layers, not only a case in which any layer is in contact with any other layer but also a case in which another layer or material is interposed between the two layers is included.

In the present specification, when amount, concentration, or other values or parameters are given as an enumeration of a range, a preferred range, or a preferred upper limit, and a preferred lower limit, it should be understood that they specifically disclose all ranges which may be formed by a pair of any upper range limit or preferred value and any lower range limit or preferred value, regardless of whether the range is separately disclosed. When a range of numerical values is mentioned in the present specification, unless otherwise stated, for example, where there is no limiting word such as "more than" and "less than", the range is intended to include the end point value and all integers and fractions within the range. The category of the present disclosure is not intended to be limited by a specific value mentioned when defining the range.

Among physical properties mentioned in the present specification, when a measured temperature affects the corresponding physical properties, the physical properties are those measured at room temperature, unless otherwise particularly defined. The term "room temperature" is a natural temperature which is neither heated nor cooled, and for example, may be any one temperature within a range of about 10 Celsius degree (°C) to 30°C, or a temperature of about 23°C or about 25°C. In addition, unless otherwise particularly stated, the unit of temperature in the present specification is Celsius degree (°C).

In addition, among physical properties mentioned in the present specification, when a measured pressure affects the corresponding physical properties, the physical properties are those measured at normal pressure, that is, an atmospheric pressure (about 1 atm) unless otherwise particularly defined.

The present disclosure relates to a secondary battery.

The present disclosure provides a secondary battery including: a positive electrode including a positive electrode active material; an electrolyte; and a negative electrode, wherein the secondary battery has a capacity change rate with respect to a change in termination voltage represented by the following Equation 1 of 1 (Volt⁻¹) or less: [Equation 1] 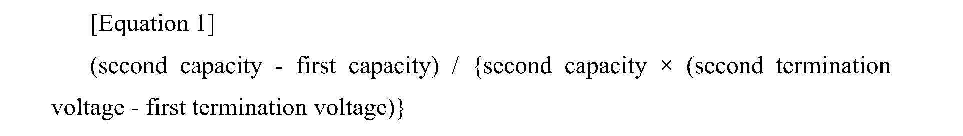 (second capacity - first capacity) / {second capacity × (second termination voltage - first termination voltage)}
wherein the second capacity is a discharge capacity measured after charging to the second termination voltage, and the first capacity is a discharge capacity measured after charging to the first termination voltage; and the second termination voltage is selected from a range of 4.15 V or more and 4.25 V or less, the first termination voltage is selected from a range of 4.05 V or more and 4.15 V or less, and a difference between the second termination voltage and the first termination voltage (second termination voltage - first termination voltage) is 0.05 V or more.

The capacity change rate with respect to the change in termination voltage represented by Equation 1 is calculated by representing a difference in capacity when measuring the charge/discharge capacity of a secondary battery with different termination voltages as a ratio to a difference in termination voltage and then normalizing it to a second capacity value, and the secondary battery of which the capacity change rate is verified to be low may have a small capacity deviation even when the potential of a positive electrode is changed for various reasons in manufacture or operation. That is, since the secondary battery of the present disclosure may have relatively stable and consistent quality despite various variables or external factors shown in a design and/or manufacturing process, a secondary battery having expected specifications may be obtained in a high yield.

In the present specification, "termination voltage" may refer to the upper limit voltage of charge or the end voltage of charge when charging/discharging a secondary battery. In a secondary battery, constant current (CC) charge refers to charge at a specified constant ampere (A) by continuing to flow constant current, and constant voltage (CV) charge refers to charge to a specified volt (V) as a charge mode maintaining constant voltage. In general, when the secondary battery is charged, it may be charged in a CC/CV mode, and in the CC/CV mode charge, when the charge is started, the battery is charged in a CC mode, and when voltage rises and then reaches a constant voltage, the charge mode changes to a CV mode, so that the battery is charged with a gradually decreasing current amount at a constant voltage, and then when current (I) reaches a predetermined value, charge is ended. The termination voltage may refer to a voltage at which the CC charge mode changes to the CV charge mode. Otherwise, for example, it may refer to a voltage set arbitrarily by a user in order to end the charge in the CC charge mode, or may refer to any constant voltage set during charge in the CV charge mode.

The second capacity may be a discharge capacity measured after charging to the second termination voltage.

The first capacity may be a discharge capacity measured after charging to the first termination voltage.

The first capacity may be measured by, for example, CC charging to the first termination voltage at a first C-rate, CV charging until Current (I) reaches less than 0.05 C, and then CC discharging to the voltage selected from a range of 1.5 V or more and 3.5 V or less at a second C-rate.

The second capacity may be measured by, for example, CC charging to the second termination voltage at a third C-rate, CV charging until Current (I) reaches less than 0.05 C, and then CC discharging to the voltage selected from a range of 1.5 V or more and 3.5 V or less at a fourth C-rate.

The first C-rate, the second C-rate, the third C-rate, and the fourth C-rate refer to charge/discharge rates at a speed at which the secondary battery is charged or discharged, and the first C-rate, the second C-rate, the third C-rate, and the fourth C-rate may be the same as or different from one another and may be independently selected from a range of 0.1 C or more and 0.5 C or less.

The first C-rate and the second C-rate may be selected as the same value.

The third C-rate and the fourth C-rate may be selected as the same value.

The first C-rate and the third C-rate may be selected as the same value.

The second C-rate and the fourth C-rate may be selected as the same value.

The first C-rate and the third C-rate may be the same, the second C-rate and the fourth C-rate may be the same, and the first C-rate and the second C-rate may be the same.

In addition, the first C-rate and the third C-rate may be the same, the second C-rate and the fourth C-rate may be the same, and the first C-rate and the second C-rate may be different from each other.

The voltage selected from the range of 1.5 V or more and 3.5 V or less has a concept including a discharge voltage, a discharge final voltage, and/or a discharge end voltage and may refer to a minimum voltage for discharging during charge/discharge of a secondary battery. That is, it may refer to a voltage at the end of discharge when a secondary battery is charged and then discharged. For example, it means that after the secondary battery is CC/CV charged, as soon as the voltage selected from the range is reached while CC discharging, discharge is ended. The voltage selected from the range of 1.5 V or more and 3.5 V or less may be preferably a value selected from a range of 1.8 V or more and 3.0 V or less, more preferably a value selected from a range of 2.0 V or more and 2.6 V or less, or a value selected from a range of 2.0 V or more and 3.5 V or less.

When the discharge capacity is measured at the voltage lower than 1.5 V, the electrode plate or lead of the secondary battery may be melted and damaged, or overdischarged to be in a dangerous state. Meanwhile, when the discharge capacity is measured at a voltage higher than 3.5 V, the discharge ends early, and thus, the capacity may be decreased.

The second termination voltage may be selected from a range of 4.15 V or more and 4.25 V or less.

The first termination voltage may be selected from a range of 4.05 V or more and 4.15 V or less.

The second termination voltage may be selected from a range higher than the first termination voltage.

A difference between the second termination voltage and the first termination voltage (second termination voltage - first termination voltage) may be 0.05 V or more, preferably 0.05 V or more and 0.2 V or less.

The second capacity may refer to a second discharge capacity which is measured by CC charging to the second termination voltage selected from a range of 4.15 V or more and 4.25 V or less at the third C-rate, CV charging until Current (I) reaches less than 0.05 C, and then CC discharging to the voltage selected from a range of 1.5 V or more and 3.5 V or less at the fourth C-rate.

The first capacity may refer to a first discharge capacity which is measured by CC charging to the first termination voltage selected from a range of 4.05 V or more and 4.15 V or less at the first C-rate, CV charging until Current (I) reaches less than 0.05 C, and then CC discharging to the voltage selected from a range of 1.5 V or more and 3.5 V or less at the second C-rate.

The discharge voltages during measurement of the second capacity and/or the first capacity may be the same.

The measurement of the first capacity and the second capacity may be performed after a step of activating the secondary battery. Herein, the step of activating the secondary battery may be performed according to a commonly known activation process of the secondary battery, and for example, may be performed in the CC discharge mode by setting the first termination voltage or the second termination voltage to a charge end voltage and setting any voltage selected from a range of 1.5 V or more and 3.5 V or less in the CC/CV charge mode to a discharge end voltage, but is not limited thereto.

The secondary battery may have the capacity change rate with respect to a change in termination voltage represented by Equation 1 of 1 (Volt⁻¹) or less. When the capacity change rate satisfies the range, it means that a difference in capacity is small as compared with a change in termination voltage, and a secondary battery satisfying the range has a small capacity change rate as compared with the change in termination voltage. Therefore, when the capacity change rate with respect to the change in termination voltage satisfies the above range, a secondary battery which has consistent quality despite changes in external influence occurring in a design and/or manufacturing process may be provided.

The capacity change rate with respect to the change in termination voltage represented by Equation 1 may be 0.9 (Volt⁻¹) or more and 1 (Volt⁻¹) or less, specifically 0.9 (Volt⁻¹) or more and 0.99 (Volt⁻¹) or less, 0.91 (Volt⁻¹) or more and 0.96 (Volt⁻¹) or less, 0.91 (Volt⁻¹) or more and 0.95 (Volt⁻¹) or less, or 0.91 (Volt⁻¹) or more and 0.94 (Volt⁻¹) or less.

As described above, the secondary battery is characterized by having a low capacity change rate depending on the change in termination voltage, and thus, a capacity deviation depending on a difference in termination voltage may be decreased. The secondary battery may have a small deviation depending on the change in termination voltage without being affected by various variables occurring in a secondary battery design and/or manufacturing process, and eventually, may have relatively stable and consistent performance despite changes in the external environment.

The second capacity measured after charging to the second termination voltage and the first capacity measured after charging to the first termination voltage of the secondary battery may satisfy a capacity deviation represented by the following Equation 2:

[Equation 2] $\left|\left(second capacity-first capacity\right)/first capacity\right| \leq 0.1 .$

Specifically, the second capacity may be measured by, for example, CC charging to the second termination voltage at the third C-rate, CV charging until Current (I) reaches less than 0.05 C, and then CC discharging to the voltage selected from a range of 1.5 V or more and 3.5 V or less at the fourth C-rate.

The first capacity may be measured by, for example, CC charging to the first termination voltage at the first C-rate, CV charging until Current (I) reaches less than 0.05 C, and then CC discharging to the voltage selected from a range of 1.5 V or more and 3.5 V or less at the second C-rate. The second termination voltage may be selected from a range higher than the first termination voltage, and the second capacity may be a value equal to or greater than the first capacity.

In addition, the second capacity measured after charging to the second termination voltage and the first capacity measured after charging to the first termination voltage of the secondary battery may satisfy a capacity deviation represented by the following Equation 3:

[Equation 3] $\left|\left(second capacity-first capacity\right)/second capacity\right| \leq 0.1$

The first C-rate, the second C-rate, the third C-rate, and the fourth C-rate may be independently of one another selected from a range of 0.1 C to 0.5 C.

The above description may be identically applied to the first C-rate, the second C-rate, the third C-rate, and the fourth C-rate.

As described above, when the capacity deviation obtained by calculating a difference between the second capacity and the first capacity to the first capacity and/or the second capacity satisfies 0.1 or less, the secondary battery of the present disclosure may have relatively stable and consistent quality despite various variables or external factors appearing in the design and/or manufacturing process.

The positive electrode active material may include a lithium transition metal oxide including 80 mol% or more of nickel (Ni). Specifically, the positive electrode active material includes a lithium transition metal oxide, and a positive electrode active material including a lithium transition metal oxide having a nickel composition to the total moles of transition metal in the lithium transition metal oxide of 80 mol% or more may include a positive electrode active material having a lattice volume and a Curie-Weiss temperature in a specific section by adjusting an input ratio of lithium and a transition metal precursor.

The lithium transition metal oxide may have a layered structure.

In addition, the lithium transition metal oxide may include a high-nickel lithium transition metal oxide.

In the present specification, a "layered structure" may refer to a structure in which the positive electrode active material includes a lithium layer and a transition metal layer. In the present specification, "high-nickel" may mean that nickel (Ni) is included at, for example, 80 mol% or more, or in another example, 85 mol% or more or 90 mol% or more, with respect to the total transition metal in the lithium transition metal oxide.

The positive electrode active material may have a mole ratio of the transition metal (including Ni, Co, Mn, or a dopant element substituted for a transition metal site) to lithium (Li) of more than 1 (Li/metal ratio < 1), which is a different value from the input ratio. Since the input ratio includes by-products and impurities such as LiOH and Li₂CO₃, the structural and electrochemical characteristics may not be accurately represented only by the input ratio. In general, though the Li/transition metal ratio is more than 1 in the input ratio, considering the amounts of lithium (Li) as an impurity and the doping element substituted for the transition metal site, a ratio of the Li/transition metal of only the positive electrode active material may be less than 1.

The positive electrode active material may have a mole ratio of lithium (Li) to a transition metal (including Ni, Co, Mn, or a dopant element substituted for a transition metal site) of 0.9 or more and less than 1. Preferably, the mole ratio of lithium to the transition metal may be 0.91 or more and less than 1, 0.92 or more and less than 1, specifically 0.95 or more and less than 1, 0.96 or more and less than 1, or 0.97 or more and less than 1. When the mole ratio of lithium to the transition metal in the structure of the positive electrode active material is more than the above range, the nickel occupancy in the lithium layer (Ni_{Li}) may be increased, and on the contrary, when the mole ratio is less than the range, the nickel occupancy in the lithium layer (Ni_{Li}) may be decreased.

The positive electrode active material may include a lithium transition metal oxide represented by any one of the following Chemical Formulae 1 to 3:

[Chemical Formula 1] Li₍₁₋ₐ₎(NiₓM¹₍₁₋ₓ₎)M²_{y}O₂

[Chemical Formula 2] Li₍₁₋ₐ₎(NiₓM¹₍₁₋ₓ₎)_{1-y}M²_{y}O₂

[Chemical Formula 3] Li_{(1-a-y)}(NiₓM¹₍₁₋ₓ₎)M²_{y}O₂

wherein M¹ is at least one selected from Co and Mn; M² is at least one selected from Al, Zr, B, W, Mo, Cr, Ta, Nb, Mg, Ce, Hf, La, Ti, Sr, Ba, F, P, S, Na, Si, Sb, V, and Y; and 0<a<0.1, 0.8≤x≤1, and 0≤y≤0.1.

The positive electrode active material may include an NCM-based lithium transition metal oxide or include a lithium transition metal oxide doped with a doping element such as M². When the positive electrode active material is doped, for example, a quaternary lithium transition metal oxide such as NCMA may be included.

The positive electrode active material includes a lithium layer and a transition metal layer, and at least a part of lithium sites of the lithium layer may be occupied by nickel.

Since the ionic radius of Ni²⁺ (0.69 Å) of the positive electrode active material is similar to the ionic radius of Li⁺ (0.76 Å³) in an octahedral environment, a small amount of Ni²⁺ reduced from Ni³⁺ may easily occupy the lithium site and replace lithium in the lithium layer. Accordingly, at least a part of the lithium layer is occupied by nickel, and phase transition occurring in the charging/discharging process, in particular, H2/H3 phase transition behavior, may be affected by the nickel occupancy in the lithium layer (Ni_{Li}). Since the nickel included in the lithium layer has a pillar effect of controlling collapse of the lithium layer in a phase transition process, the nickel needs to appropriately occupy the lithium layer. For example, as the nickel occupancy in the lithium layer (Ni_{Li}) is increased, a H2/H3 transition peak appears at a higher voltage, and a voltage plateau (V_{H2/H3}) may be increased, and on the contrary, as the nickel occupancy in the lithium layer (Ni_{Li}) is decreased, the H2/H3 transition peak appears at a lower voltage, and the voltage plateau (V_{H2/H3}) may be decreased. Based on the tendency, the voltage value at which the H2/H3 phase transition occurs may be adjusted depending on the charge/discharge upper limit voltage of the secondary battery to optimize the charge/discharge capacity of the battery. The H2/H3 phase transition refers to phase transition from a second hexagonal phase to a third hexagonal phase and may cause crack formation and gas production. Therefore, only when the nickel occupancy in the lithium layer (Ni_{Li}) and the H2/H3 phase transition therefrom are appropriately controlled, electrochemical properties including the charge/discharge capacity of a battery may be implemented as intended.

The positive electrode active material may have a Curie-Weiss (CW) temperature of 0 K or higher and 19 K or lower. Preferably, the positive electrode active material may have the Curie-Weiss temperature of 3 K or higher and 18 K or lower, more preferably 4 K or higher and 12 K or lower. Otherwise, the Curie-Weiss temperature of the positive electrode active material may be, for example, 3 K or higher and 10 K or lower.

As the Curie-Weiss temperature is lowered, the lattice volume may be decreased, and since the Curie-Weiss temperature of the positive electrode active material satisfies the range, the positive electrode active material has a specific lattice volume, and thus, the capacity change rate and/or the capacity deviation depending on the change in termination voltage may be decreased.

The Curie-Weiss temperature may be measured by a superconducting quantum interference device (SQUID), but is not limited thereto, and generally any device or method may be used without limitation as long as it may measure the Curie-Weiss temperature of the positive electrode active material for a secondary battery.

The positive electrode active material may have a lattice volume of 101.5 Å³ or more and 101.6 Å³ or less. Specifically, the lattice volume may be 101.5 Å³ or more and 101.6 Å³ or less, 101.55 Å³ or more and 101.6 Å³ or less, and more specifically 101.5 Å³ or more and 101.57 Å³ or less. Otherwise, it may be 101.55 Å³ or more and less than 101.57 Å³.

When the lattice volume of the positive electrode active material satisfies the range, the mole ratio of lithium to the transition metal in the positive electrode active material structure may be decreased, and the mole ratio of lithium to the transition metal in the positive electrode active material structure may be less than 1, as described above.

The lattice volume may be measured by powder X-ray diffraction (XRD), but is not limited thereto, and generally any device or method may be used without limitation as long as it may measure the lattice volume of the positive electrode active material for a secondary battery.

The positive electrode active material as described above may result from a competitive effect of (1) (Ni average oxidation number)*(concentration) and (2) Ni defects in Li layer (Ni_{Li}) in the structure. Herein, the lattice volume may represent (1) (Ni average oxidation number)*(concentration) in the structure, and the Curie-Weiss temperature may represent (2) Ni defects in Li layer (Ni_{Li}). The competitive effect is gradually saturated in a specific section, and the present inventors may particularly specify a secondary battery having a small capacity change rate (or small capacity deviation) depending on a difference in termination voltage.

The nickel occupancy in the lithium layer (Ni_{Li}) may be 0.003 or more and 0.015 or less.

In the present specification, the "nickel occupancy in lithium layer (Ni_{Li})" may refer to a mole fraction of nickel in the lithium layer. The nickel occupancy may be measured by Rietveld refinement through XRD measurement. In the present specification, "lithium" or "nickel" includes ions thereof.

The positive electrode active material may be characterized by having the nickel occupancy in the lithium layer (Ni_{Li}) of 0.004 or more and 0.014 or less or 0.004 or more and 0.013 or less, and more preferably 0.005 or more and 0.012 or less. Since the positive electrode active material includes nickel occupying the lithium layer in the predetermined range as described above, it may satisfy the lattice volume and the Curie-Weiss temperature described above simultaneously. This is meaningful in that control of H2/H3 phase transition behavior and corresponding securing of the accurate capacity of a secondary battery according to the design purpose may be easily confirmed and controlled in a positive electrode active material level. The nickel occupancy in the lithium layer (Ni_{Li}) may be controlled, for example, by adjusting the synthesis conditions of the positive electrode active material (for example, Li/transition metal mole ratio, firing temperature, and/or firing time, and the like, but not limited thereto).

The Curie-Weiss temperature of the positive electrode active material may be adjusted to a desired temperature range while finely adjusting the input ratio of Li and the transition metal precursor during the preparation of the positive electrode active material. However, just because the input ratio of Li and the transition metal precursor is the same, the lattice volume and the Curie-Weiss temperature are not set to the same value, and they may vary depending on various factors and/or environments such as equipment, precursor quality, mass production process, presence/content of impurities, or temperature or humidity during synthesis.

The physical properties and the electrochemical properties of the synthesized positive electrode active material may be analyzed and determined by the structural and/or magnetic properties of the positive electrode active material after synthesis. That is, the properties of the positive electrode active material are not determined only by the input ratio of Li and the transition metal precursor.

The secondary battery may achieve the capacity change rate depending on a difference in termination voltage required by the secondary battery to a desired level, by using the positive electrode active material satisfying the lattice volume and/or the Curie-Weiss temperature in the range described above. Therefore, the most efficient process variables from the materials such as the positive electrode active material to the final battery step may be identified and controlled, and thus, a secondary battery having optimized performance and excellent stability may be designed.

The secondary battery of the present disclosure may include a positive electrode, an electrolyte, and a negative electrode.

The positive electrode may include a positive electrode current collector and a positive electrode active material layer placed on at least one surface of the positive electrode current collector, and the positive electrode active material layer may include the positive electrode active material described above. The positive electrode active material layer may further include a conductive material, a binder, and/or an additive, and the like.

The positive electrode current collector is not particularly limited as long as it has conductivity without causing chemical change, and may be formed of, for example, copper (Cu), nickel (Ni), aluminum (Al), vanadium (V), gold (Au), platinum (Pt), chromium (Cr), iron (Fe), zinc (Zn), indium (In), germanium (Ge), lithium (Li), magnesium (Mg), stainless steel (for example, SUS), titanium (Ti), cobalt (Co), or an alloy thereof.

The positive electrode current collector may have a thickness of 3 µm to 500 µm, and fine unevenness may be formed on the surface of the positive electrode current collector to increase adhesive strength to the positive electrode active material. For example, various forms such as a film, a sheet, a foil, a net, a porous body, foam, and a nonwoven fabric body may be used. The positive electrode current collector may be omitted in some cases.

The conductive material is used for imparting conductivity to an electrode and may be used without particular limitation as long as it has an electron conductivity without causing a chemical change. Specific examples thereof may include graphite such as natural graphite or artificial graphite; carbon-based materials such as carbon black, acetylene black, ketjen black, channel black, furnace black, lamp black, thermal black, carbon fiber, carbon nanotubes, and carbon nanofiber; metal powder or metal fiber such as copper, nickel, aluminum, and silver; conductive whisker such as zinc oxide and potassium titanate; conductive metal oxides such as titanium oxide; conductive polymers such as a polyphenylene derivative, and the like, and these may be used alone or in combination of two or more. The conductive material may be usually included at 1 wt% or more and 30 wt% or less with respect to the total weight of the positive electrode active material layer.

The binder serves to improve adhesion between positive electrode active material particles and adhesive strength between the positive electrode active material and the current positive electrode collector. Specific examples thereof include polyvinylidene fluoride (PVDF), vinylidene fluoride-hexafluoropropylene copolymer (PVDF-co-HFP), polyvinyl alcohol (PVA), polyacrylonitrile, carboxymethyl cellulose (CMC), starch, hydroxypropyl cellulose, regenerated cellulose, polyvinylpyrrolidone (PVP), polytetrafluoroethylene (PTFE) polyethylene (PE), polypropylene (PP), an ethylene-propylene-diene monomer rubber (EPDM rubber), sulfonated-EPDM, styrene-butadiene rubber (SBR), fluorine rubber, various copolymers thereof, and the like, and these may be used alone or in combination of two or more. The binder may be included at 1 wt% or more and 30 wt% or less with respect to a total weight of the positive electrode active material layer.

The positive electrode may further include an additive. The additive may further include, for example, an additive such as a filler, a coating agent, a dispersant, a thickener, and an ion conductive auxiliary, and any known material commonly used in an electrode may be used without limitation.

The positive electrode may be manufactured by a common manufacturing method of a positive electrode, except for using the positive electrode active material described above. Specifically, the positive electrode may be manufactured by applying a composition for forming a positive electrode active material layer including the positive electrode active material, and optionally, the binder, the conductive material, and/or the additive on a positive electrode current collector, and the like, and then drying and rolling. Herein, the composition for forming a positive electrode active material may further include a solvent, and the types and contents of the positive electrode active material, the binder, the conductive material, and the additive are as described above.

The solvent may be a solvent commonly used in the art and may include dimethyl sulfoxide (DMSO), isopropyl alcohol, N-methylpyrrolidone (NMP), acetone, water, or the like, and these may be used alone or in combination of two or more. An amount of the solvent used is sufficient to have a viscosity to allow dissolution or dispersion of the positive electrode active material, the conductive material, the binder, and the like and then excellent thickness uniformity to be shown when application for manufacturing the positive electrode, considering an application thickness of slurry and a manufacturing yield.

The positive electrode may be manufactured by casting the composition for forming a positive electrode active material layer on a separate support, peeling off a film from the support, and laminating the film on the positive electrode current collector.

The positive electrode may further include known components which may be included in the positive electrode in the lithium secondary battery in addition to the components described above.

In the secondary battery, the negative electrode may include a negative electrode current collector and a negative electrode active material layer placed on at least one surface of the negative electrode current collector. The negative electrode may be, in another example, a negative electrode for an anodeless battery which does not include the negative electrode active material layer immediately after manufacture of the battery and then includes the negative electrode active material layer such as a lithium metal layer formed during charging.

The negative electrode current collector is not particularly limited as long as it has a high conductivity without causing a chemical change in a battery, and may be for example, copper, stainless steel (for example, SUS), aluminum, nickel, titanium, baked carbon, copper or stainless steel which is surface-treated or coated with carbon, nickel, titanium, silver, or the like, an aluminum-cadmium alloy, and the like.

The negative electrode current collector may usually have a thickness of 3 µm to 500 µm, and fine unevenness may be formed on the surface of the negative electrode current collector to enhance adhesive strength to the negative electrode active material, like the positive electrode current collector. For example, it may be used in various forms such as a film, a sheet, a foil, a net, a porous body, foam, or a nonwoven fabric body.

The negative electrode active material layer optionally includes the binder, the conductive material, and/or the additive, and the like, with the negative electrode active material. The negative electrode active material layer may be manufactured by, as an example, applying a composition for forming a negative electrode including a negative electrode active material and the like on a negative electrode current collector and drying, or casting the composition for forming a negative electrode on a separate support, peeling off a film from the support, and laminating the film on the negative electrode current collector. The composition for forming a negative electrode may further include a solvent, and the solvent may be selected from the examples of the solvent included in the composition for forming a positive electrode described above.

The negative electrode active material may be a compound capable of reversible intercalation and deintercalation of lithium. A specific example thereof may include carbonaceous materials such as artificial graphite, natural graphite, graphitized carbon fiber, or amorphous carbon; metallic compounds capable of being alloyed with lithium, such as Si, Al, Sn, Pb, Zn, Bi, In, Mg, Ga, Cd, Ag, Au, In alloy, Si alloy, Sn alloy, or Al alloy; metal oxide capable of doping and dedoping lithium such as SiO_{β} (0<β≤2), SnO₂, vanadium oxides, or lithium vanadium oxides; or composites including the metallic compound and the carbonaceous material such as a Si-C composite or a Sn-C composite, and these may be used alone or in combination of two or more. In addition, a metal lithium thin film may be used as the negative electrode active material. In addition, as the carbon material, both low-crystalline carbon and high-crystalline carbon may be used. The low-crystalline carbon is representatively soft carbon and hard carbon, and the high-crystalline carbon is representatively high-temperature baked carbon such as amorphous, platelike, scaly, spherical, or fibrous natural graphite or artificial graphite, Kish graphite, pyrolytic carbon, mesophase pitch-based carbon fiber, meso-carbon microbeads, mesophase pitches, or petroleum or coal tar pitch derived cokes. In addition, the description of the positive electrode may be identically applied to the binder and the conductive material, and the binder and the conductive material included in the negative electrode may be the same as or different from the binder and the conductive material included in the positive electrode. In addition, the negative electrode active material layer may be omitted in some cases.

In the secondary battery, the electrolyte may include organic-based liquid electrolytes, inorganic-based liquid electrolyte, solid polymer electrolytes, gel type polymer electrolytes, solid inorganic electrolytes, molten type inorganic electrolytes, or the like, which may be used in the manufacture of lithium secondary battery, but is not limited thereto.

The electrolyte may include for example, an organic solvent and/or a lithium salt.

As the organic solvent, any organic solvent may be used without particular limitation as long as it may serve as a medium in which ions involved in the electrochemical reaction of a battery may move. Specifically, as the organic solvent, ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene or fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), or propylene carbonate (PC); alcohol-based solvents such as ethyl alcohol or isopropyl alcohol; nitriles such as R-CN (R is a C₂ to C₂₀ linear, branched, or cyclic hydrocarbon group and may include a double bond aromatic ring or an ether bond); amides such as dimethylformamide; dioxolane such as 1,3-dioxolane; or sulfolanes, and the like may be used. Among them, a carbonate-based solvent is preferred, and a mixture of cyclic carbonate having a high ion conductivity and a high dielectric constant (for example, ethylene carbonate, propylene carbonate, or the like) and a linear carbonate-based compound having a low viscosity (for example, ethyl methyl carbonate, dimethyl carbonate, diethyl carbonate, or the like), which may increase charge/discharge performance of a battery, is more preferred. In this case, when the cyclic carbonate and the chain carbonate are mixed at a volume ratio of about 1:1 to about 1:9 and used, high dielectric constant and low-viscosity properties may be satisfied simultaneously, excellent ion conductivity properties are implemented, and thus, electrolyte solution performance may be shown excellently.

The electrolyte may further include, for example, haloalkylene carbonate-based compounds such as difluoroethylene carbonate; or one or more additives such as pyridine, triethylphosphite, triethanolamine, cyclic ether, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, or aluminum trichloride, for improving a life characteristic of a battery, suppressing a decrease in a battery capacity, improving a discharge capacity of a battery, and the like, in addition to the components of the electrolyte. Here, the additive may be included at 0.1 wt% to 5 wt% with respect to total weight of the electrolyte. The lithium salt may be used without particular limitation as long as it is a compound capable of providing a lithium ion used in a secondary battery.

For example, the lithium salt includes Li⁺ as a cation and at least any one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, BF₆⁻, SF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, F₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻, as an anion.

Specifically, the lithium salt may include at least any one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiTFSI (LiN(SO₂CF₃)₂), LiFSI (LiN(SO₂F)₂), LiCH₃SO₃, LiCF₃CO₂, LiCH₃CO₂, and LiBETI (LiN(SO₂CF₂CF₃)₂). Specifically, the lithium salt may include a single material or a mixture of two or more selected from the group consisting of LiBF₄, LiClO₄, LiPF₆, LiBOB (LiB(C₂O₄)₂), LiCF₃SO₃, LiTFSI (LiN(SO₂CF₃)₂), LiFSI ((LiN(SO₂F)₂), and LiBETI (LiN(SO₂CF₂CF₃)₂).

A concentration of the lithium salt may be 0.1 M or more and 4 M or less, specifically 0.1 M or more and 2 M or less, and more specifically 0.8 M or more and 1.6 M or less in the electrolyte. When the concentration of the lithium salt is within the range, the electrolyte has appropriate conductivity and viscosity, so that excellent electrolyte performance may be shown, and lithium ions may effectively move, thereby improving the output characteristics of the secondary battery.

The electrolyte may include a solid electrolyte, and when the solid electrolyte is included, the solid electrolyte may replace the act of the separator, and thus, the separator may not be included.

The solid electrolyte may include, for example, an oxide-based solid electrolyte, a sulfide-based solid electrolyte, a polymer-based solid electrolyte, a halide-based solid electrolyte, or the like, but is not limited thereto.

The sulfide-based solid electrolyte contains a sulfur (S) atom, and also has ion conductivity of a metal belonging to Group 1 or Group 2 of the periodic table and electron insulating properties. The sulfide-based solid electrolyte contains Li, S, and P as an element and preferably has lithium ion conductivity, but may include elements other than Li, S, and P, depending on the purpose or case.

As a specific sulfide-based solid electrolyte, for example, Li₂S-P₂S₅, Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂OP₂S₅, Li₂S-LiBr-P₂S₅, Li₂SLi₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂SGa₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂SSiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂SSiS₂-Li₃PO₄, Li₁₀GeP₂S₁₂, or the like may be used.

An example of the oxide-based solid electrolyte may include: LiₓₐLa_{ya}TiO₃(xa=0.3-0.7, ya=0.3-0.7)(LLTO), Li_{xb}La_{yb}Zr_{zb}Mbb_{mb}O_{nb} (Mbb is at least one element of Al, Mg, Ca, Sr, V, Nb, Ta, Ti, Ge, In, and Sn, xb satisfies 5≤xb≤10, yb satisfies 1≤yb≤4, zb satisfies 1≤zb≤4, mb satisfies 0≤mb≤2, and nb satisfies 5≤nb≤20), Li_{xc}B_{yc}Mcc_{zc}O_{nc} (Mcc is at least one element of C, S, Al, Si, Ga, Ge, In, and Sn, xc satisfies 0≤xc≤5, yc satisfies 0≤yc≤1, zc satisfies 0≤zc≤1, and nc satisfies 0≤nc≤6), Li_{xd}(Al, Ga)_{yd}(Ti, Ge)_{zd}Si_{ad}P_{md}O_{nd}(provided that 1≤xd≤3, 0≤yd≤1, 0≤zd≤2, 0≤ad≤1, 1≤md≤7, 3≤nd≤13), Li₍₃₋₂ₓₑ₎MeeₓₑDeeO (xe is a number of 0 or more and 0.1 or less, Mee is a divalent metal atom, and Dee is a halogen atom or a combination of two or more halogen atoms), Li_{xf}Si_{yf}O_{zf} (1≤xf≤5, 0<yf≤3, 1≤zf≤10), Li_{xg}S_{yg}O_{zg} (1≤xg≤3, 0<yg≤2, 1≤zg≤10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w is w<1), Li_{3.5}Zn_{0.25}GeO₄ having a lithium super ionic conductor (LISICON)-type crystal structure, La_{0.55}Li_{0.35}TiO₃ having a perovskite-type crystal structure, LiTi₂P₃O₁₂ having a sodium (Na) super ionic conductor (NASICON)-type crystal structure, Li_{1+xh+yh}(Al, Ga)ₓₕ(Ti, Ge)₂₋ₓₕSi_{yh}P₃-_{yh}O₁₂ (provided that 0≤xh≤1, 0≤yh≤1), Li₇La₃Zr₂O₁₂(LLZO) having a garnet-type crystal structure, and the like. Otherwise, a phosphorus compound including Li, P, and O may also be used. For example, it may include lithium phosphate (Li₃PO₄), LiPON in which a part of oxygen of lithium phosphate is substituted by nitrogen, LiPOD1 (D1 is at least one selected from Ti, V, Cr, Mn, Fe, Co, Ni, Cu, Zr, Nb, Mo, Ru, Ag, Ta, W, Pt, Au, and the like), and the like. Otherwise, LiA1ON (A1 is at least one selected from Si, B, Ge, Al, C, Ga, and the like) may be used.

The polymer-based solid electrolyte is an ion conductive material and includes a polymer material which is commonly used as a solid electrolyte material of an all-solid-state battery, but is not particularly limited thereto. The polymer-based solid electrolyte may include, for example, a polyether-based polymer, a polycarbonate-based polymer, an acrylate-based polymer, a polysiloxane-based polymer, a phosphazene-based polymer, polyethylene oxide (PEO), a polyethylene derivative, an alkylene oxide derivative, a phosphate ester polymer, a poly-agitation lysine, polyester sulfide, polyvinyl alcohol, polyvinylidene fluoride, a polymer including an ionic dissociation group, or the like. Otherwise, the polymer-based solid electrolyte may include a branched copolymer, a comb-like polymer, a crosslinked polymer resin, and the like, obtained by copolymerizing an amorphous polymer such as polymethyl methacrylate (PMMA), polycarbonate, polysiloxane, and/or phosphazene as a polymer resin as a comonomer into a polyethylene oxide (PEO) main chain.

The solid electrolyte may include a gel type polymer electrolyte. The gel-type polymer electrolyte includes an organic electrolyte solution including a lithium salt and a polymer resin, and the organic electrolyte solution may be included at 60 to 400 parts by weight with respect to 100 parts by weight of the polymer resin. The polymer resin applied to the gel-type polymer is not limited to specific components, but may include for example, polyvinylchloride (PVC), poly(methyl methacrylate (PMMA)-based, polyacrylonitrile (PAN), poly(vinylidene fluoride) (PVDF), poly(vinylidene fluoride)-hexafluoropropylene (PVDF-HFP), or the like.

In addition, the secondary battery may optionally further include a separator. Meanwhile, when the electrolyte includes the solid electrolyte described above, the solid electrolyte serves as the separator, and thus, the secondary battery does not include a separate separator, but the present disclosure is not limited thereto.

In the secondary battery, the separator separates the negative electrode and the positive electrode and provides a transport passage of lithium ions, and any separator may be used without particular limitation as long as it is usually used as a separator in a secondary battery. In particular, a separator having a low resistance to ion migration of an electrolyte and excellent electrolyte impregnation ability, is preferred. Specifically, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more films thereof, may be used. In addition, a common porous nonwoven fabric, for example, a glass fiber having a high melting point, a nonwoven fabric made of a polyethylene terephthalate fiber, and the like may be used. In addition, a coated separator containing a ceramic component or a polymer material for securing thermal resistance or mechanical strength may be used, selectively as a monolayer or multilayer structure. The separator may be omitted in some cases.

The secondary battery may be a pouch type, an angular type, or a cylindrical type, and any shape and size may be applied without limitation as long as they are commonly used in the secondary battery.

In addition, the secondary battery may further include a case for sealing an electrode assembly, such as a container, a pouch, a pack, or a module, for storing the electrode assembly including the positive electrode, the electrolyte, and the negative electrode. The case may optionally further include a sealing member.

Hereinafter, the present disclosure will be described in detail with reference to the examples in order to describe the disclosure of the present disclosure and the action and effect intended in the present disclosure as described above in detail. However, the examples may be modified in various other forms, and the scope of the present specification is not construed as being defined only by the examples. It is emphasized that the examples are provided for describing the representative of the present disclosure to a person skilled in the art in detail.

### Examples

### Preparation Example 1. Preparation of positive electrode active material

A lithium source, LiOH was added to Ni_{0.85}Co_{0.05}Mn_{0.10}(OH)₂ as a positive electrode active material precursor and mixed so that a Li/transition metal mole ratio was 1.02, and 1 wt% of B₂O₃ and 1 wt% of K₂CO₃ were added and mixed. The mixed powder was added to a firing furnace. Thereafter, first firing was performed at 400°C for 4 hours under an oxygen atmosphere. Then, powder after undergoing crushing, washing, and drying processes was mixed with 0.1 wt% of H₃BO₃, and second firing was performed at 690°C to 710°C for 6 hours under an air atmosphere to obtain a lithium transition metal composite oxide-based positive electrode active material.

### Preparation Example 2. Preparation of positive electrode active material

A positive electrode active material was prepared in the same manner as in Preparation Example 1, except that the Li/transition metal input ratio was adjusted to 1.03 instead of 1.02.

### Preparation Example 3. Preparation of positive electrode active material

A positive electrode active material was prepared in the same manner as in Preparation Example 1, except that the Li/transition metal input ratio was adjusted to 1.04 instead of 1.02.

### Preparation Example 4. Preparation of positive electrode active material

A positive electrode active material was prepared in the same manner as in Preparation Example 1, except that the Li/transition metal input ratio was adjusted to 1.05 instead of 1.02.

### Comparative Preparation Example 1. Preparation of positive electrode active material

A positive electrode active material was prepared in the same manner as in Preparation Example 1, except that the Li/transition metal input ratio was adjusted to 1.01 instead of 1.02.

### Experimental Example 1

Lattice volume, Curie-Weiss temperature, and nickel occupancy in the lithium layer of the positive electrode active materials prepared in Preparation Examples 1 to 4 and Comparative Preparation Example 1 were measured by the following measurement method, and the results are shown in the following Table 1.

A relationship between the lattice volume and the Curie-Weiss temperature of the positive electrode active materials prepared in Preparation Examples 1 to 4 and Comparative Preparation Example 1 is shown in FIG. 1.

### Lattice volume

XRD measurement was performed using D8 Endeavor equipment (Cu target 40kV, 40 mA; Lynxeye-XE-T 1D detector) available from Bruker. Measurement conditions were fixed divergence slit of 0.5°, 2θ=10-125°, Δ2θ=0.016°, and time per step of 0.4 s, and slit spacing adjustment, a 2θ measurement range, a Δ2θ spacing, time per step, and the like may be adjusted to suit the sample depending on the microstrain or crystallinity of the powder sample. Sampling was performed 3 times on the same powder sample, and average and deviation values were determined. Subsequently, a TOPAS program was used for the XRD measurement data to determine lattice constants a and c, and the lattice volume V.

The lattice constants a and c, and the lattice volume for the R-3m crystal group were calculated by a fundamental parameter approach method considering the measurement device information, and the crystalline size and microstrain were calculated by a Rietveld method.

### Curie-Weiss temperature

A magnetic susceptibility was measured in a 5-300 K section, using MPMS equipment available from Quantum Design, Inc. Magnetic field and measurement temperature step may be changed by the sample measurement conditions, and in the evaluation example, a measurement temperature step was measured at 5 K intervals while applying a magnetic field of 1 Tesla. In Preparation Examples 1 to 4 and Comparative Preparation Example 1, a rapid increase in the magnetic susceptibility by ferromagnetic impurities was not observed.

Meanwhile, where there are other magnetic impurities, the magnetic susceptibility may be described by a general formula including impurities, as follows (see Stephen Blundell, Magnetism in Condensed Matter):

χₘ^{cgs}[emu/mol/Oe]=M/H=χₛₐₘₚₗₑ+(χ_{T}+χ₀)_{impurity}= C/(T-θ_{CW}) + C_{T}/T+χ₀

The magnetic susceptibility of the sample of interest and the magnetic susceptibility of impurities may be out in a mixed state, and the magnetic susceptibility of impurities may be divided into a temperature-dependent magnetic susceptibility C_{T}/T according to the Curie-Weiss law and a low temperature-dependent magnetic susceptibility χ₀.

When an inverse is taken for the magnetic susceptibility (inverse magnetic susceptibility) and drawn along the temperature, a line having a constant slope and a y-intercept may be drawn in the temperature section of the magnetic phase transition temperature or higher. The effect of the magnetic susceptibility by impurities is removed, and the slope a and the y-intercept b of the inverse magnetic susceptibility may be determined for the magnetic susceptibility of the sample, thereby determining an effective magnetic moment and a Curie-Weiss temperature:
$1 / χ = \left(T-{θ}_{CW}\right) / C = 1 / C * T - {θ}_{CW} / C = aT + b$

Effective magnetic moment µ_{eff}=2.827sqrt(χₘ^{cgs}T)≒2.827sqrt(C)=2.827sqrt(1/a)

### Curie-Weiss temperature

${θ}_{CW} = - b * C$

The Curie-Weiss temperature shows an average intensity of self-interaction of a magnetic material, and in the high-nickel layered structure active material, when the nickel occupancy in the lithium layer is high, the Curie-Weiss temperature has a positive value (dominant ferromagnetic interaction). Herein, as the nickel occupancy is lowered, the positive Curie-Weiss temperature tends to be decreased, and the change in Curie-Weiss temperature depending on the nickel occupancy in the lithium layer is more sensitive than the change in effective magnetic moment, and is less dependent on a crystal structure model, unlike the Rietveld structural analysis. Therefore, when the lattice constant of XRD and the change in Curie-Weiss temperature are observed, a sample having an adjusted nickel occupancy in the lithium layer may be complementarily synthesized.

### Nickel occupancy in lithium layer (Ni_{Li})

Assuming an ideal simple crystal structure model, lithium in a LiMO₂ unit cell is placed at a Wyckoff position 3a (0 0 0), M such as a transition metal and Al is placed at 3b (0 0 0.5), and oxygen is placed at a 3c (0 0 z) position. Actually, during the synthesis of high-nickel positive electrode active material, Ni²⁺ has a similar radius to Li⁺, and some Ni³⁺ is reduced to Ni²⁺, so that Ni²⁺ may occupy the Li⁺ site. Herein, since the substituted lithium may be present as a form other than a LiMO₂ unit cell or occupy a transition metal layer, a crystal structure model in which lithium and some nickel mainly occupy the Wyckoff position 3a, and nickel and some lithium mainly occupy 3b, (Li₁₋ₓNi²⁺ₓ)^{3a}(Ni³⁺_{1-y}Li_{y})^{3b}O₂ is used as an initial model to perform Rietveld analysis. At this time, some nickel occupancy x at the 3a position and some lithium occupancy y at the 3b position do not need to be the same in the crystal structure model. In the present evaluation, the lithium occupancy y at the 3b position was fitted to 0, and the crystal structure model was simplified to use a (Li₁₋ₓNi²⁺ₓ)^{3a}(M)^{3b}O₂ (M=Ni, Co, Mn, Al, and the like) model. By the XRD measurement and analysis method, the nickel occupancy in the lithium layer was precisely measured by deviation of the lattice constants a=0.0002 Å and c=0.001 Å, and the lattice volume V=0.01 Å.

### Experimental Example 2. Manufacture of secondary battery and evaluation of discharge capacity

An NCM-based positive electrode active material (Ni 90%), a conductive material (MWCNT), and a PVDF binder were mixed at a weight ratio of 97.0:1.0:2.0 in N-methylpyrrolidone to prepare a positive electrode slurry. The positive electrode slurry was applied on one surface of an aluminum current collector sheet having a thickness of 15 µm at a loading amount of 25 mg/cm² to form a positive electrode active material layer having a thickness of 160 µm, dried at 160°C, and then rolled to manufacture a positive electrode.

Natural graphite, a conductive material (Super-C65), styrene-butadiene rubber (SBR), and carboxymethyl cellulose (CMC) were mixed in water at a weight ratio of 97:1:1:1 to prepare a negative electrode slurry. The negative electrode slurry was applied on the other surface of a copper current collector sheet at a loading amount of 14 mg/cm² to form a negative electrode active material layer having a thickness of 175 µm, dried at 100 °C, and then rolled to manufacture a negative electrode.

A 14 µm separator made of PE was interposed between the positive electrode and the negative electrode manufactured in the above, stacking was performed in the order of separator/positive electrode/separator/negative electrode, and then winding was performed to manufacture a jelly-roll-type electrode assembly. At this time, the positive electrode active material layer and the negative electrode active material layer were disposed so as to face the separator to manufacture an electrode assembly. The electrode assembly manufactured as such was inserted into a cylindrical type battery can, and an electrolyte solution was injected to manufacture a 21700 cylindrical lithium secondary battery.

In order to evaluate the capacity of the 21700 cylindrical battery, two consecutive cycles were performed. In a first cycle, CC charge was performed to 4.2 V at 0.5 C, CV charge proceeded until I < C/20, and CC discharge was performed to 3.0 V at 0.5 C. In a second cycle, CC charge was performed to 4.1 V at 0.5 C, CV charge was finished when I < C/20, and CC discharge was performed to 3.0 V at 0.5 C. All capacity tests were performed in a chamber maintained at 40°C using a 10 A cycler (PECC05-10: Wonik PNE). The produced 21700 battery was stored for 2 hours in order to reach thermal equilibrium before the test.

The capacity change rate evaluated therefrom is shown in the following Table 1. A relationship between the lattice volume and the capacity change rate of the secondary battery manufactured in Experimental Example 2 is shown in FIG. 2, and a relationship between the Curie-Weiss temperature and the capacity change rate is shown in FIG. 3.

**[Table 1]**

| Classification | Nickel occupancy in lithium layer (Ni_{Li}) | Curie-Weiss temperature (K) | Lattice volume (Å³) | Capacity change rate (Volt⁻¹) |
|---|---|---|---|---|
| Preparation Example 1 | 0.7% or less | 17.1 | 101.5978 | 0.946 |
| Preparation Example 2 | 0.7% or less | 11.4 | 101.5698 | 0.947 |
| Preparation Example 3 | 0.7% or less | 9.5 | 101.5672 | 0.912 |
| Preparation Example 4 | 0.7% or less | 2.92 | 101.5704 | 0.957 |
| Comparative Preparation Example 1 | about 1% | 19.3 | 101.6473 | 1.033 |

## Claims

1. A secondary battery comprising:
a positive electrode comprising a positive electrode active material; an electrolyte; and
a negative electrode,
wherein the secondary battery has a capacity change rate with respect to a change in termination voltage represented by a following Equation 1 of 1 (Volt⁻¹) or less: [Equation 1] 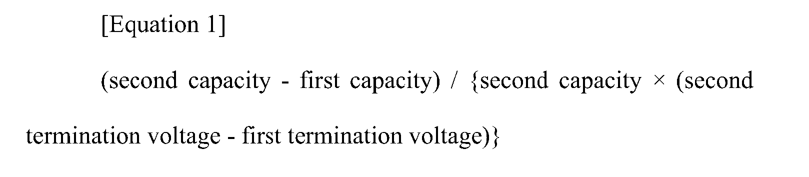 (second capacity - first capacity) / {second capacity × (second termination voltage - first termination voltage)}
wherein the second capacity is a discharge capacity measured after charging to the second termination voltage, and the first capacity is a discharge capacity measured after charging to the first termination voltage; and
the second termination voltage is selected from a range of 4.15 V or more and 4.25 V or less, the first termination voltage is selected from a range of 4.05 V or more and 4.15 V or less, and a difference between the second termination voltage and the first termination voltage (second termination voltage - first termination voltage) is 0.05 V or more.

2. The secondary battery of claim 1, wherein the first capacity is measured by CC charging to the first termination voltage at a first C-rate, CV charging until a Current (I) value reaches less than 0.05 C, and then CC discharging to a voltage selected from a range of 1.5 V or more and 3.5 V or less at a second C-rate,
the second capacity is measured by CC charging to the second termination voltage at a third C-rate, CV charging until the Current (I) value reaches less than 0.05 C, and then CC discharging to the voltage selected from a range of 1.5 V or more and 3.5 V or less at a fourth C-rate,
discharge voltages during measurement of the first capacity and the second capacity are the same, and
the first C-rate, the second C-rate, the third C-rate, and the fourth C-rate are independently of one another selected from a range of 0.1 C or more and 0.5 C or less.

3. The secondary battery of claim 1, wherein the secondary battery has the capacity change rate with respect to the change in termination voltage represented by Equation 1 that is 0.9 (Volt⁻¹) or more and 1 (Volt⁻¹) or less.

4. The secondary battery of claim 1, wherein the positive electrode active material comprises a lithium transition metal oxide comprising 80 mol% or more of nickel (Ni).

5. The secondary battery of claim 1, wherein the positive electrode active material has a mole ratio of lithium to a transition metal (Ni, Co, Mn, or a dopant substituted for a transition metal site) of 0.9 or more and less than 1.

6. The secondary battery of claim 1, wherein the positive electrode active material comprises a lithium transition metal oxide represented by any one of following Chemical Formulae 1 to 3:
[Chemical Formula 1] Li₍₁₋ₐ₎(NiₓM¹₍₁₋ₓ₎)M²_{y}O₂
[Chemical Formula 2] Li₍₁₋ₐ₎(NiₓM¹₍₁₋ₓ₎)_{1-y}M²_{y}O₂
[Chemical Formula 3] Li_{(1-a-y)}(NiₓM¹₍₁₋ₓ₎)M²_{y}O₂
wherein M¹ is at least one selected from Co and Mn; M² is at least one selected from Al, Zr, B, W, Mo, Cr, Ta, Nb, Mg, Ce, Hf, La, Ti, Sr, Ba, F, P, S, Na, Si, Sb, V, and Y; and 0<a<0.1, 0.8≤x≤1, and 0≤y≤0.1.

7. The secondary battery of claim 1, wherein the positive electrode active material comprises a lithium layer and a transition metal layer, and at least a part of lithium sites of the lithium layer is occupied by nickel.

8. The secondary battery of claim 7, wherein a nickel occupancy in the lithium layer (Ni_{Li}) is 0.003 or more and 0.015 or less.

9. The secondary battery of claim 1, wherein the positive electrode active material has a Curie-Weiss temperature of 0 K or higher and 19 K or lower.

10. The secondary battery of claim 1, wherein the positive electrode active material has a Curie-Weiss temperature of 3 K or higher and 10 K or lower.

11. The secondary battery of claim 1, wherein the positive electrode active material has a lattice volume of 101.5 Å³ or more and 101.6 Å³ or less.
